# NOUVEAU FASCICULE DE BREVET EUROPEEN

(11) **EP 3 063 431 B2**
(45) Date de publication et mention de la décision concernant l'opposition: **24.01.2024**
(45) Mention de la délivrance du brevet: 25.10.2017
(21) Numéro de dépôt: 14809448.5
(22) Date de dépôt: 31.10.2014
(51) Int. Cl.: F16F 15/131, F16D 3/12, F16H 45/02

(54) **MÉCANISME DE FILTRATION DES FLUCTUATIONS DE COUPLE D'UN ORGANE SECONDAIRE**
MECHANISMUS ZUM FILTERN VON DREHMOMENTSCHWANKUNGEN EINES SEKUNDÄREN ELEMENTS
MECHANISM FOR FILTERING TORQUE FLUCTUATIONS OF A SECONDARY MEMBER

(30) Priorité: 31.10.2013 FR 1360749; 12.05.2014 FR 1454219
(43) Date de publication de la demande: 07.09.2016
(73) Titulaire: Valeo Embrayages, 80009 Amiens Cedex 2 (FR)
(72) Inventeur: BOULET, Jérôme, F-60510 Oroer (FR); FLECHE, Benoit, F-60500 Chantilly (FR); FENIOUX, Daniel, F-80480 Saleux (FR); CAILLERET, Franck, F-80009 Amiens (FR); LAURIDSEN, Carsten, F-60240 Mesnil Le Theribus (FR); VERHOOG, Roel, F-60190 Gournay Sur Aronde (FR); MARECHAL, Olivier, F-80000 Amiens (FR); MAHE, Hervé, F-80480 Salouel (FR)
(74) Mandataire: Valeo Powertrain Systems
(86) Numéro de dépôt international: PCT/FR2014/052779
(87) Numéro de publication internationale: WO 2015/063430

(56) Documents cités:
- FR-A1- 2 857 073

## Description

### DOMAINE TECHNIQUE DE L'INVENTION

L'invention se rapporte à un mécanisme d'amortissement des acyclismes d'un moteur à combustion interne, notamment pour une application à un véhicule automobile, et notamment à un double volant amortisseur, à un amortisseur à friction ou à un convertisseur de couple.

### ETAT DE LA TECHNIQUE ANTERIEURE

Afin d'atténuer les irrégularités de rotation d'un vilebrequin de moteur à combustion interne, principalement à des vitesses entre la vitesse de ralenti et une vitesse de régime intermédiaire, par exemple environ 2500 tours/min, il a été proposé, dans le document FR2857073 d'accoupler directement au vilebrequin d'un moteur à combustion interne un volant d'inertie atténuateur de vibrations de torsion ou de fluctuations de vitesse de rotation, constitué de deux masses d'inerties coaxiales dont une première est solidaire en rotation du vilebrequin, et comporte une couronne de démarreur et un plateau de réaction d'un embrayage à friction, alors que la deuxième est mobile en rotation par rapport à la première, grâce à des modules de liaison articulés comportant chacun au moins un bras oscillant pivotant par rapport à la première masse d'inertie autour d'un axe parallèle à l'axe de révolution, une masse oscillante positionnée à une extrémité libre du bras oscillant de manière à être mobile dans une direction essentiellement radiale, et une bielle reliant un point intermédiaire du bras oscillant à la deuxième masse d'inertie. Par effet centrifuge, les modules articulés s'opposent à la rotation relative des masses d'inertie en exerçant un couple de rappel sensiblement proportionnel à la rotation relative des deux masses d'inertie et au carré de la vitesse de rotation de la masse d'inertie liée au vilebrequin. Dans la mesure où il est monté directement sur le vilebrequin, ce dispositif tend à augmenter le moment d'inertie à vaincre au démarrage. Dans la mesure où il constitue le premier étage de filtration des fluctuations de couple du moteur, le mécanisme doit être dimensionné avec une inertie importante pour avoir un effet notable, et les modules articulés qui subissent ses fluctuations non atténuées doivent eux-mêmes être particulièrement robustes. Une inertie primaire élevée conduit également à donner une inertie élevée en aval du volant d'inertie, au niveau de l'embrayage à friction et d'éventuels dispositifs de filtration interposés entre l'embrayage et la boîte de transmission, ce qui va à l'encontre des objectifs de réduction de la consommation et d'allégement des mécanismes.

### EXPOSE DE L'INVENTION

L'invention vise à remédier aux inconvénients de l'état de la technique et à améliorer la filtration des variations de couple moteur à bas régime, et notamment, à titre indicatif, en dessous de 2000 tours par minutes.

Pour ce faire est proposé, selon un premier aspect de l'invention, un mécanisme de filtration des fluctuations de couple et/ou de vitesse de rotation interposé entre un vilebrequin d'un moteur à combustion interne tournant autour d'un axe de révolution et une boîte de transmission, comportant un organe à amortir tournant autour de l'axe de révolution, un volant d'inertie oscillant tournant autour de l'axe de révolution par rapport à l'organe à amortir, et un mécanisme de liaison entre le volant d'inertie oscillant et l'organe à amortir, le mécanisme de liaison comportant des modules articulés permettant un débattement angulaire du volant d'inertie oscillant par rapport à l'organe à amortir de part et d'autre d'une position d'équilibre, les modules articulés comportant chacun au moins un bras oscillant pivotant radialement par rapport à l'organe à amortir et un organe de liaison cinématique entre le bras oscillant et le volant d'inertie oscillant, positionné de manière à ce que lorsque le mécanisme tourne autour de l'axe de révolution, les efforts centrifuges sur le bras oscillant engendrent sur l'organe à amortir un couple antagoniste qui tend à rappeler le volant d'inertie oscillant et l'organe à amortir vers la position d'équilibre, le couple antagoniste augmentant avec la vitesse de rotation du mécanisme et avec l'amplitude du débattement angulaire. Selon l'invention, le mécanisme comporte en outre un organe primaire cinématiquement interposé entre le vilebrequin et l'organe à amortir, ce dernier constituant un organe secondaire qui tourne autour de l'axe de révolution par rapport à l'organe primaire. Le volant d'inertie oscillant, placé au secondaire, n'est pas à entraîner par le démarreur lors d'un démarrage en position débrayée. De plus, il devient possible d'interposer entre le vilebrequin et l'organe à amortir un étage de filtration, ce qui permet une diminution de la masse des bras oscillants et de l'inertie du volant pour un effet équivalent. Le mécanisme de filtration permet de réaliser une raideur apparente variable avec la vitesse de rotation et sans ressort.

De préférence, le mécanisme comporte des moyens de solidarisation du volant d'inertie oscillant à l'organe secondaire lorsque la vitesse de rotation du mécanisme dépasse un seuil de vitesse prédéterminé, qui en pratique est de préférence supérieur à la vitesse de ralenti du moteur, par exemple un seuil de vitesse supérieur à 1500 tr/min mais inférieur à 2500 tr/min.

Suivant un mode de réalisation préféré, chaque bras oscillant est disposé en regard d'une butée correspondante, pour limiter le mouvement radial vers l'extérieur de chaque bras oscillant.

Les butées peuvent être positionnées sur l'organe secondaire. Toutefois, suivant un mode de réalisation préféré, les butées sont solidaire du volant d'inertie oscillant, pour solidariser le volant à l'organe à amortir par effet centrifuge lorsque la vitesse dépasse un seuil prédéterminé. Les butées sont disposées de préférence de manière à ce que les bras oscillants correspondants ne viennent à leur contact que lorsque la vitesse de rotation de l'organe à amortir est suffisante pour que les efforts centrifuges engendrent une déformation élastique des modules articulés.

Suivant un mode de réalisation particulièrement avantageux, le mécanisme comporte des éléments de rappel élastique pour rappeler l'organe secondaire vers une position angulaire de référence par rapport à l'organe primaire. On constitue ainsi, en amont de l'organe secondaire dans la chaîne cinématique de transmission, un premier étage de filtration entre l'organe primaire et l'organe secondaire. Le deuxième étage de filtration constitué par le volant d'inertie oscillant relié à l'organe secondaire a une caractéristique de filtration qui varie en fonction de la vitesse de rotation. Les fluctuations vues par l'organe secondaire étant atténuées par le premier étage de filtration, il est possible d'obtenir l'effet supplémentaire de filtration recherché avec des bras oscillants et un volant de masses réduites.

Suivant un mode de réalisation, on peut notamment prévoir de loger les éléments élastiques au moins partiellement dans un volume situé entre l'organe primaire et l'organe secondaire. des fenêtres de logement de ressorts constituant les éléments de rappel élastique.

On peut également prévoir le cas échéant des éléments de friction pour dissiper de l'énergie lors des mouvements angulaires relatifs entre l'organe primaire et l'organe secondaire.

Suivant un mode de réalisation, l'un des organes primaire et secondaire comprend un voile et l'autre des organes primaire et secondaire comprend deux rondelles de guidage fixées l'une à l'autre et situées axialement de part et d'autre du voile. L'organe à amortir peut ainsi être constitué par le voile ou l'une des rondelles ou être solidaire du voile ou de l'une des rondelles.

Suivant un mode de réalisation, l'organe primaire comporte une interface de fixation au vilebrequin, constituée par exemple par des trous de passage de vis ou de rivets. Dans cette hypothèse d'un organe primaire directement fixé au vilebrequin, l'organe primaire peut également constituer une couronne de démarreur. Il peut également constituer un volant d'inertie primaire.

Suivant un mode de réalisation, l'un des organes primaire et secondaire est solidaire de surfaces de friction d'un embrayage à friction.

Suivant une première variante, les surfaces de friction sont portées par l'organe primaire, qui est relié à l'organe secondaire par des ressorts de filtration pour former un embrayage à friction à filtration intégrée.

Suivant une autre variante, les surfaces de friction sont solidaire de l'organe secondaire, un double volant amortisseur étant constitué par l'organe primaire et l'organe secondaire avec interposition d'éléments élastiques.

Le guidage en rotation du volant d'inertie peut être réalisé de différentes manières, et notamment par un palier monté sur l'organe primaire, sur l'organe secondaire ou sur une pièce, par exemple un moyeu ou une couronne, solidaire de l'organe primaire ou de l'organe secondaire.

Suivant un mode de réalisation, l'organe secondaire comporte une interface de liaison à un arbre d'entrée de la boîte de transmission, qui peut notamment être réalisée sous forme d'un moyeu cannelé.

Pour éviter tout balourd, les modules de liaison articulés sont en nombre pair et deux à deux symétriques par rapport à l'axe de révolution et de préférence deux à deux symétriques par rapport à un plan de symétrie comprenant l'axe de révolution, ce qui apporte un gain en encombrement.

Selon l'invention, les modules de liaison articulés sont disposés axialement entre l'organe secondaire et l'organe primaire, et/ou à l'intérieur d'un logement de l'organe primaire.

Suivant un mode de réalisation, l'organe de liaison cinématique comporte au moins un corps roulant, de préférence un rouleau. De préférence, le bras oscillant pivote par rapport à l'organe à amortir autour d'un axe de pivotement, le corps roulant ayant un axe de rotation parallèle à l'axe de pivotement.

De préférence, le chemin de roulement formé sur le bras oscillant et le chemin de roulement formé sur le volant d'inertie oscillant sont conformés de façon telle que le couple antagoniste augmente avec la vitesse de rotation et avec l'amplitude du débattement angulaire. De préférence, le chemin de roulement formé sur le bras oscillant est tourné radialement vers l'extérieur. Le chemin de roulement formé sur le bras oscillant est concave, dans un plan de coupe perpendiculaire à l'axe de révolution. De même, le chemin de roulement formé sur le volant d'inertie oscillant est de préférence tourné radialement vers l'intérieur et de préférence concave, dans un plan de coupe perpendiculaire à l'axe de révolution.

De préférence, le chemin de roulement formé sur le volant d'inertie oscillant, le chemin de roulement formé sur le bras oscillant et le corps roulant sont tels que dans la position de référence, le corps roulant est dans une position d'éloignement maximal par rapport à l'axe de révolution.

De préférence, le chemin de roulement formé sur le volant d'inertie oscillant, le chemin de roulement formé sur le bras oscillant et le corps roulant sont tels que dans la position de référence, un axe radial passant par l'axe de révolution et par un point de contact entre le corps roulant et le chemin de roulement formé sur le volant d'inertie oscillant est, dans un plan perpendiculaire à l'axe de révolution, perpendiculaire au chemin de roulement formé sur le volant d'inertie oscillant.

Suivant un mode de réalisation, le chemin de roulement formé sur le volant d'inertie oscillant, le chemin de roulement formé sur le bras oscillant et le corps roulant sont tels que dans la position de référence, un axe radial passant par l'axe de révolution et par un point de contact entre le corps roulant et le chemin de roulement formé sur le bras oscillant est, dans un plan médian perpendiculaire à l'axe de révolution, perpendiculaire au chemin de roulement formé sur le bras oscillant.

Suivant un autre mode de réalisation, l'organe de liaison cinématique comporte une bielle de liaison entre le bras oscillant et le volant d'inertie oscillant. De préférence, le bras oscillant pivote par rapport à l'organe secondaire autour d'un premier axe de pivotement, la bielle pivote autour du bras oscillant autour d'un deuxième axe de pivotement et par rapport au volant d'inertie oscillant autour d'un troisième axe de pivotement, qui sont tous parallèles à l'axe de révolution. Les pivots réalisant les premier, deuxième et troisième axe de pivotement, ou certains d'entre eux, peuvent être des paliers lisses ou à roulement définissant des axes de pivotement fixes par rapport au pièces articulées. Il peut également s'agir pour au moins l'un d'entre eux d'un pivot roulant, avec une pièce male de plus faible diamètre que la pièce femelle qui la reçoit, ou avec deux douilles dans lesquelles roule un rouleau, de manière à donner aux axes de pivotement un faible degré de liberté par rapport aux pièces articulées.

Suivant un mode de réalisation, le premier axe de pivotement est situé à une extrémité du bras oscillant, le deuxième axe de pivotement entre la bielle et le bras oscillant étant positionnée dans une position intermédiaire entre le premier axe de pivotement et l'extrémité libre opposée du bras oscillant. Cette extrémité libre est de préférence massive, et peut être pourvue de masses rapportées.

Le bras oscillant de chaque module s'étend de préférence dans une direction circonférentielle, de manière à ce que le mouvement des bras oscillants soit essentiellement radial par rapport à l'axe de révolution.

Suivant un mode de réalisation, le deuxième axe de pivotement se trouve à une distance de l'axe de révolution intermédiaire entre le premier axe de pivotement et le troisième axe de pivotement, au moins lorsque le deuxième et le troisième axes de pivotement sont coplanaires avec l'axe de révolution.

De manière préférentielle, les premier, deuxième et troisième axes sont disposés de telle manière que le bras oscillant est à son apogée, dans la position de sa trajectoire la plus éloignée de l'axe de révolution, lorsque le deuxième axe de pivotement et le troisième axe de pivotement sont situés dans un plan radial contenant l'axe de révolution. La position relative correspondante de l'organe à amortir et du volant d'inertie oscillant constitue une position d'équilibre qui est atteinte en régime stationnaire en l'absence de fluctuation du couple moteur. Tout mouvement angulaire relatif entre l'organe à amortir et le volant d'inertie oscillant à partir de cette position de référence a pour effet de rapprocher les bras oscillants de l'axe de révolution.

De préférence, les premier, deuxième et troisième axes de pivotement étant disposés de telle manière qu'au repos, la distance entre le bras oscillant et la butée passe par un minimum non nul lorsque le deuxième axe de pivotement le troisième axe de pivotement et l'axe de révolution se positionnent dans un même plan radial. Les bras oscillants n'entrent en contact avec les butées correspondantes pour rendre le volant d'inertie oscillant solidaire de l'organe à amortir que lorsque la vitesse de rotation de l'organe à amortir est suffisante pour induire une déformation élastique des modules de liaison, cette déformation pouvant être localisée au niveau des bras oscillants, des pivots et/ou de la bielle. De préférence, les bras oscillants ont une partie médiane, située entre leur axe de pivotement sur l'organe à amortir et leur extrémité libre venant au contact de la butée, qui est relativement flexible pour permettre leur déformation par effet de la force centrifuge.

Le troisième axe de pivotement peut être situé radialement à l'intérieur ou à l'extérieur du deuxième axe de pivotement.

Suivant un autre aspect de l'invention, celle-ci a trait à un ensemble mécanique comportant un mécanisme de filtration tel que décrit précédemment et un embrayage à friction simple ou double, comportant des surfaces de friction, notamment des garnitures de friction, solidaires de l'organe primaire ou de l'organe secondaire. En particulier, elle a trait à un tel ensemble dont l'embrayage comporte un voile de friction solidaire de l'organe secondaire. En particulier, on peut prévoir un voile de friction situé axialement à distance de l'organe à amortir et solidarisé à l'organe à amortir par l'intermédiaire d'une pièce de connexion. Ceci sera le cas notamment si un plateau de pression de l'embrayage est logé axialement entre l'organe secondaire et le voile de friction, notamment dans le cas d'un embrayage à double friction. Comme il a été expliqué précédemment, le mécanisme de filtration peut être disposé cinématiquement en amont ou en aval l'embrayage à friction.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'une chaîne cinématique de transmission à double volant d'inertie intégrant un mécanisme de filtration suivant un mode de réalisation de l'invention;
- la figure 2, une vue de face du double volant d'inertie de la figure 1 ;
- la figure 3, une vue isométrique en coupe d'une partie du double volant d'inertie de la figure 2, suivant les demi-plans de coupe G-G de la figure 2;
- la figure 4, une vue isométrique en coupe d'une partie du double volant d'inertie de la figure 2, suivant les demi-plans de coupe H-H de la figure 2;
- la figure 5, une vue isométrique d'une partie du double volant d'inertie de la figure 2;
- la figure 6, un schéma comparant l'atténuation, en fonction de la vitesse de rotation, d'un double volant amortisseur conventionnel, d'un hypothétique double volant amortisseur équipé du mécanisme selon l'invention sans butée, d'un double volant amortisseur équipé du mécanisme selon l'invention avec butée, et d'un hypothétique double volant amortisseur équipé du mécanisme selon l'invention dont la butée serait toujours active;
- la figure 7, une vue isométrique, partiellement coupée, d'un double volant amortisseur intégrant un mécanisme de filtration selon un autre mode de réalisation de l'invention;
- la figure 8, une vue schématique d'une chaîne cinématique de transmission à double volant d'inertie intégrant un mécanisme de filtration suivant un autre mode de réalisation de l'invention, disposé en amont d'un double embrayage;
- la figure 9, une coupe du double embrayage intégrant le double volant amortisseur et le mécanisme de filtration selon le mode de réalisation de la figure 7;
- la figure 10, une autre coupe du double embrayage de la figure 9;
- la figure 11, une vue schématique d'un embrayage à friction incorporant un mécanisme de filtration selon un autre mode de réalisation non couvert mais utile à la compréhension de l'invention;
- la figure 12, une vue schématique d'un embrayage à friction incorporant un mécanisme de filtration selon un autre mode de réalisation non couvert mais utile à la compréhension de l'invention;
- la figure 13, une vue en coupe d'une variante de l'embrayage à friction de la figure 12;
- la figure 14, une vue en perspective de l'embrayage de la figure 13;
- la figure 15 une vue schématique d'un convertisseur de couple intégrant un mécanisme de filtration de fluctuations de couple selon un mode de réalisation de l'invention;
- la figure 16, une vue isométrique éclatée du mécanisme de filtration de la figure 15;
- la figure 17, une vue partiellement de face et partiellement en coupe transversale du mécanisme de filtration de la figure 16;
- la figure 18, une vue en coupe axiale du mécanisme de filtration de la figure 16, dans le plan de coupe XVIII de la figure 17;
- la figure 19, une vue en coupe axiale du mécanisme de filtration de la figure 16, dans le plan de coupe XIX de la figure 17;
- la figure 20, une vue isométrique éclatée d'un mécanisme oscillant articulé du mécanisme de filtration de la figure 16;
- la figure 21, une vue isométrique d'un bras oscillant du mécanisme oscillant articulé de la figure 20;
- la figure 22, une vue de face d'un détail du mécanisme oscillant articulé de la figure 20 dans une première position de fin de course;
- la figure 23, une vue de face d'un détail du mécanisme oscillant articulé de la figure 20 dans une position intermédiaire de débattement radial maximal;
- la figure 24, une vue de face d'un détail du mécanisme oscillant articulé de la figure 20 dans une deuxième position de fin de course;
- la figure 25, une vue de face d'un détail d'un mécanisme oscillant articulé selon une variante de réalisation, dans une position intermédiaire de débattement radial maximal;

Pour plus de clarté, les éléments identiques ou similaires sont repérés par des signes de référence identiques sur l'ensemble des figures.

### DESCRIPTION DÉTAILLÉE DE MODES DE REALISATION

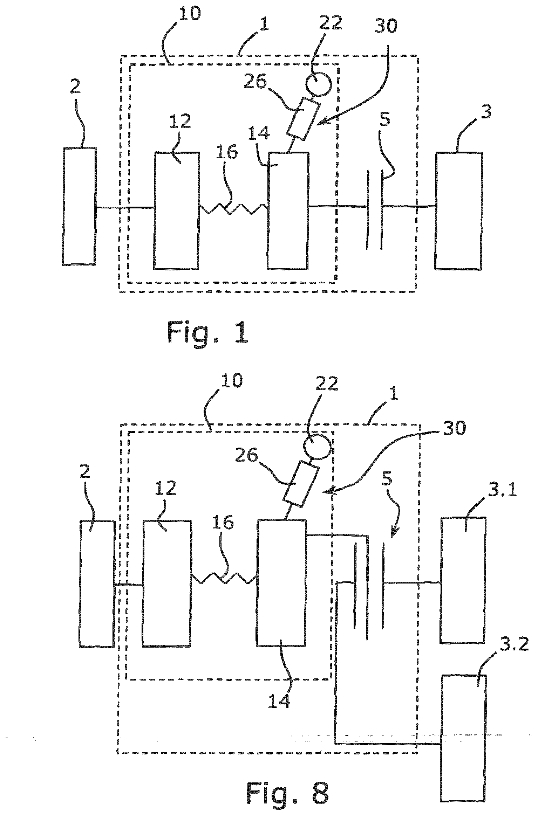

Sur la figure **1** est illustrée une chaîne cinématique de transmission **1** de véhicule automobile comportant un embrayage sec **5** situé entre un vilebrequin **2** et un arbre d'entrée de boîte de transmission **3.** En amont de l'embrayage dans la chaîne cinématique de transmission est disposé un mécanisme de filtration **10** constituant dans ce mode de réalisation un double volant amortisseur et comportant un organe primaire **12** constitué par un volant primaire relié au vilebrequin **2** et un organe secondaire **14** constitué par un volant secondaire solidaire du primaire de l'embrayage **5.** Un organe élastique **16** est interposé entre le volant primaire **12** et le volant secondaire **14** de manière à travailler lors de fluctuations de positionnement angulaire entre volant primaire **12** et volant secondaire **14.** Un mécanisme oscillant articulé **30** selon l'invention, comportant un volant d'inertie oscillant **22** relié au volant secondaire **14** par des modules de liaison articulés **26,** permet une atténuation des vibrations à bas régime du volant secondaire **14.**

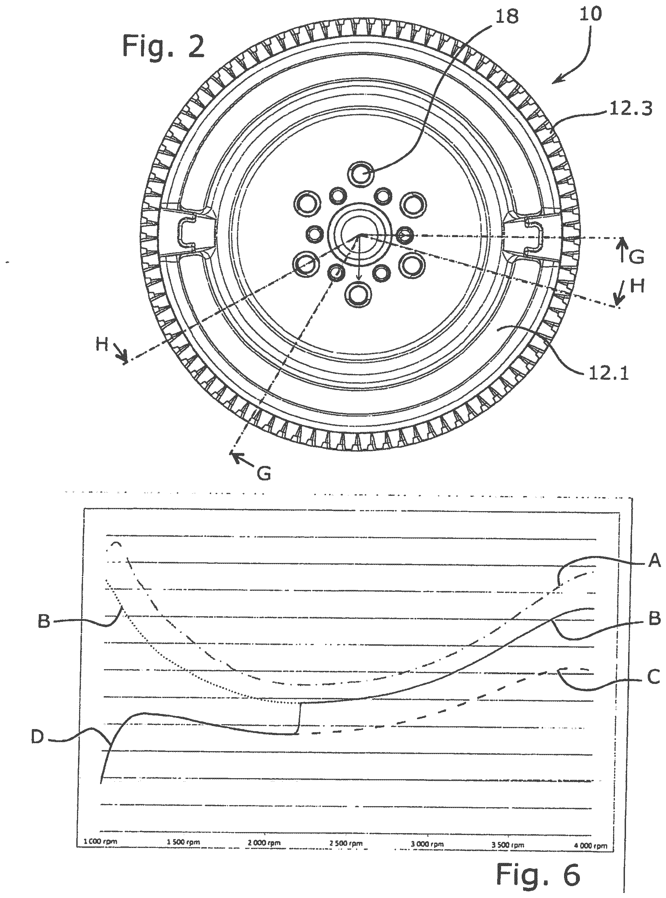

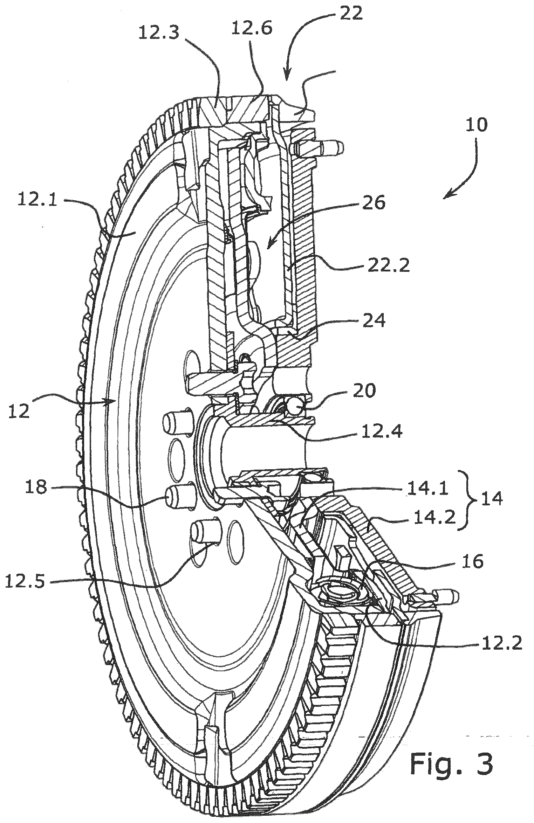

Sur les figures 2 à 5 est illustré la structure du double volant amortisseur **10,** qui comprend le volant d'inertie primaire **12** constituant l'organe primaire du mécanisme de filtration, le volant d'inertie secondaire **14** constituant l'organe secondaire du mécanisme de filtration, et les ressorts courbes **16** en appui par leurs extrémités sur le volant d'inertie primaire **12** et sur le volant d'inertie secondaire **14,** de manière à être sollicités en fonction des mouvements angulaires relatifs entre le volant d'inertie primaire **12** et le volant d'inertie secondaire **14** autour d'un axe de révolution **100** du double volant amortisseur **10.** Le volant d'inertie primaire **12** est constitué de manière classique par plusieurs pièces solidaires les unes des autres, et notamment par deux rondelles de guidage **12.1, 12.2** encadrant un voile **14.1** appartenant au volant secondaire, cette disposition assurant le guidage des ressorts **16.** L'une des rondelles de guidage **12.1** forme un logement alors que l'autre prend la forme d'un couvercle **12.2.** Le volant primaire **12** est ici équipé d'une couronne de démarrage **12.3,** d'une pièce **12.4** formant un moyeu et une plaque de fixation pourvue de trous pour le passage **12.5** pour des vis de fixation **18** au vilebrequin, et d'un anneau extérieur massif **12.6.** Le voile **14.1** du volant secondaire **14** est solidaire une pièce massive **14.2** déportée axialement à l'extérieur du volume délimité par les rondelles de guidage **12.1, 12.2.** Cette pièce massive **14.2** est guidée en rotation sur le moyeu **12.4** du volant primaire **12** par l'intermédiaire d'un palier à roulement **20.** De manière en soi connue, la pièce massive **14.2** du volant secondaire **14** est directement au contact de garnitures de friction (non représentées) d'un embrayage à friction.

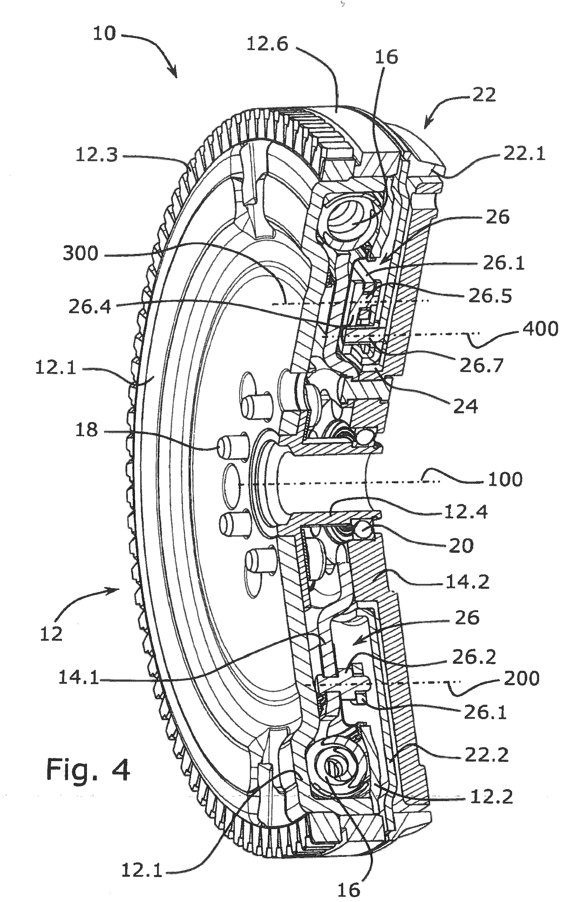

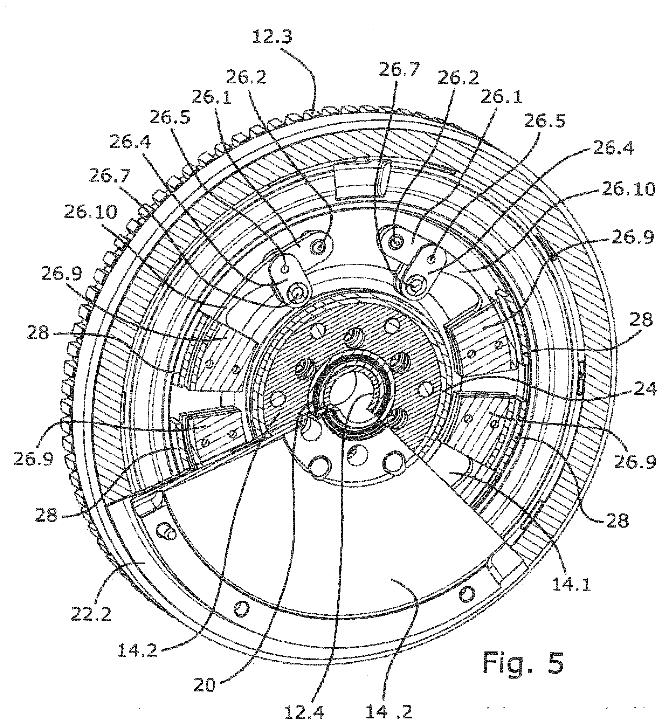

Le volant d'inertie oscillant **22,** constitué d'un anneau périphérique **22.1** et d'un voile **22.2,** est guidé en rotation autour de l'axe de révolution **100** par un palier lisse **24** interposé entre le voile **22.2** et le volant secondaire **14.** Afin d'amortir les fluctuation de couple du volant secondaire, le volant d'inertie oscillant **22** est lié à au volant secondaire **14** par l'intermédiaire de quatre modules de liaison articulés **26** disposés deux à deux symétriquement par rapport à l'axe de révolution **100** et deux à deux symétriquement par rapport à un plan de symétrie contenant l'axe de révolution. Chaque module de liaison articulé **26,** illustré plus précisément sur les figures 4 et 5, comporte un bras oscillant **26.1** articulé au volant d'inertie secondaire **14** par l'intermédiaire d'un premier pivot **26.2** pour pivoter autour d'un premier axe de pivotement **200,** et une bielle articulée **26.4** au bras oscillant **26.1** par l'intermédiaire d'un deuxième pivot **26.5** définissant un deuxième axe de pivotement **300,** et au volant d'inertie oscillant **22** par l'intermédiaire d'un troisième pivot **26.7** définissant un troisième axe de pivotement **400.** L'extrémité libre **26.9** de chaque bras oscillant **26.1,** opposée au premier pivot **26.2,** est massive et constituée dans ce mode de réalisation par des masselottes rapportées, mais qui pourrait également être monobloc avec le reste du bras oscillant **26.1.** Dans une partie intermédiaire **26.10** entre les pivots **26.2** et **26.5** d'une part et l'extrémité libre **26.9,** le bras oscillant **26.1** présente une section amincie lui conférant une certaine flexibilité. Le volant d'inertie oscillant **22** est par ailleurs pourvu de quatre butées **28** correspondant au quatre modules de liaison articulés **26,** et situés chacun en regard de l'extrémité libre du bras oscillant **26.1** correspondant.

Le dispositif fonctionne de la manière suivante. Au repos, à vitesse de rotation nulle, on peut positionner le volant d'inertie oscillant **22** dans une position angulaire de référence par rapport au volant d'inertie secondaire **14** correspondant à l'alignement du second axe de pivotement **300** et du troisième axe de pivotement **400** de la bielle **26.4,** dans un plan radial contenant l'axe de révolution **100.** Cette position correspond à l'apogée de la trajectoire quasi-statique de l'extrémité libre des bras oscillants **26.1,** c'est-à-dire le point de leur trajectoire à la fois le plus éloigné de l'axe de révolution **100** et le plus proche de la butée correspondante **28.** Dans cette position, il n'y a pas contact entre l'extrémité libre **26.9** du bras oscillant **26.1** et la butée correspondante **28,** un faible jeu, de l'ordre de quelques dixièmes de millimètre étant préservé. A partir de cette position angulaire d'équilibre, toute rotation relative du volant d'inertie oscillant **22** par rapport au volant d'inertie secondaire, dans une direction ou l'autre, contribue a rapprocher l'extrémité libre **26.9** des bras oscillants **26.1** de l'axe de révolution.

Lorsque le vilebrequin entraîne le volant primaire à faible vitesse, et notamment durant la phase de démarrage, en deçà du régime de ralenti, les fluctuations de couple moteur ne sont pas filtrées efficacement par les ressorts du double volant amortisseur **10.** A ce régime, les fluctuations de couple à chaque allumage de cylindre sont transmises au volant secondaire **14** et font fluctuer le positionnement angulaire relatif du volant secondaire **14** et du volant oscillant **22,** en retard de phase. Le mécanisme de liaison constitué par les quatre modules articulés **26** permet un débattement angulaire du volant d'inertie oscillant par rapport à au volant secondaire **14** de part et d'autre de la position d'équilibre. Le bras oscillant, en tournant avec le volant secondaire **14** autour de l'axe de révolution **100,** applique sur le pivot **26.5** un effort dans la direction définie par les deux pivots **26.5** et **26.7.** Lorsque le système est dans la position d'équilibre, la bielle est orientée radialement, et les efforts résultants au niveau du pivot **26.7,** eux-mêmes radiaux, n'engendrent aucun couple de rappel. Les fluctuations du positionnement angulaire relatif du volant secondaire et du volant oscillant ont pour effet de changer l'angle de la résultante des efforts transmis par la bielle **26.4** au volant secondaire **14,** engendrant un couple de rappel vers la position d'équilibre, qui est approximativement proportionnel à l'amplitude du débattement angulaire et au carré de la vitesse de rotation autour de l'axe de révolution. Le mécanisme oscillant articulé **30,** constitué par le volant oscillant **22** relié au volant secondaire **14** par les modules de liaison **26,** se comporte comme un filtre à raideur variable en fonction de la vitesse qui s'oppose aux variations de couple de l'organe à amortir constitué par le volant secondaire **14.**

Lorsque la vitesse de rotation autour de l'axe de révolution augmente, la résultante des efforts centrifuges appliqués par le bras oscillant **26.1** sur le pivot **26.5** augmente et l'amplitude des débattements angulaires entre le volant secondaire **14** et le volant oscillant **24** diminue. La partie flexible **26.10** du bras oscillant tend à se déformer de manière élastique et l'extrémité libre **26.9** du bras oscillant se rapproche progressivement de la butée **28.** Au-delà d'une vitesse critique donnée, par exemple 2200 tr/min, l'extrémité libre **26.9** du bras oscillant **26.1** entre en contact avec la butée, ce qui a pour effet de solidariser le volant oscillant **22** au volant secondaire **14.** L'inertie du volant oscillant **24** s'ajoute alors à celle du volant secondaire **14.** Lorsque la vitesse de rotation continue d'augmenter, les efforts sur les pivots **26.2, 26.5** et **26.7** restent relativement stables du fait de l'appui contre la butée **28.**

Le double volant amortisseur seul présente une fréquence propre autour de 1000 tr/min, inférieure à la vitesse de ralenti du moteur, mais supérieure à la vitesse du vilebrequin dans les phases de démarrage, et présente une très bonne atténuation autour de 2000 tr/min. En combinant le double volant amortisseur **10** avec le mécanisme oscillant articulé **30,** on bénéficie de l'excellente atténuation du volant oscillant **22** aux bas régimes, puis on vient bloquer le mécanisme de filtration à plus haut régime, là où le double volant amortisseur **10** est le plus efficace, ce blocage du volant oscillant **22** ayant pour effet une augmentation de l'inertie secondaire du double volant amortisseur **10.** On évite ainsi une usure prématurée des pivots **26.2, 26.5** et **26.7** des modules de liaison **26.**

La filtration combinée obtenue par le mécanisme composé du double volant amortisseur **10** et du mécanisme oscillant articulé **30** est illustrée sur la figure 6. Les courbes de la figures 6 représentent l'accélération angulaire (en radian/s2) en fonction de la vitesse de rotation (en tr/min), pour un double volant amortisseur selon des figures 1 à 7 sans volant oscillant (courbe A), pour un hypothétique double volant amortisseur selon les figures 1 à 7 dont les modules de liaison seraient bloqués, toujours en butée contre la butée **28** indépendamment du régime moteur (courbe B), pour un hypothétique double volant amortisseur équipé du volant oscillant mais sans butée **28** (courbe C) et enfin pour le double volant amortisseur selon les figures 1 à 7, équipé du volant oscillant **22** et de la butée **28** active au-delà de 2200 tr/min (courbe D, en traits plein). On constate que l'atténuation serait optimale suivant la courbe C, mais le dispositif correspondant casserait sous l'effet des forces centrifuges à haut régime. Le système selon l'invention (courbe C) est plus efficace à bas régime qu'un double volant amortisseur (courbe A) et rejoint après la vitesse critique le comportement d'un double volant amortisseur qui aurait une inertie secondaire équivalente à la somme des inerties du volant secondaire **14** et du volant oscillant **22.**

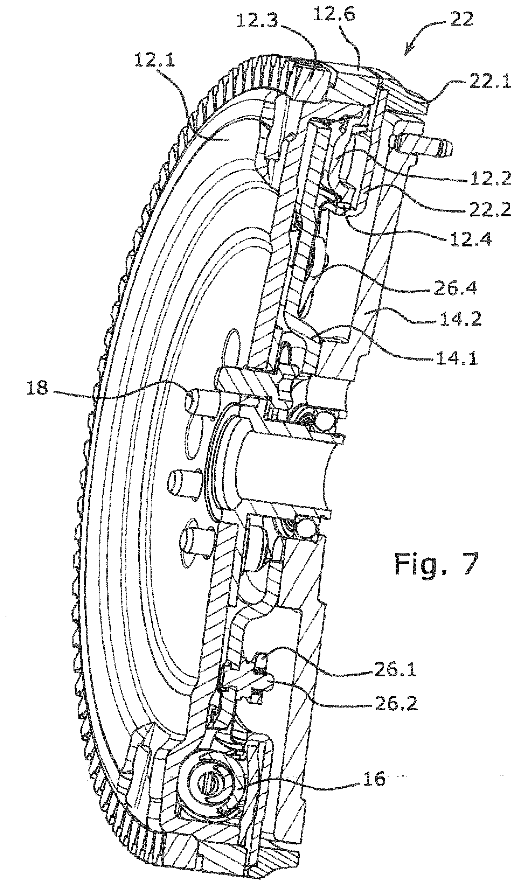

Sur la figure 7 a été illustré un double volant amortisseur équipé d'un mécanisme de filtration selon une variante du mode de réalisation précédent, qui n'en diffère essentiellement par l'emplacement du palier lisse **24** de guidage en rotation du volant oscillant **22,** qui est cette fois porté par le couvercle **12.2** de l'organe primaire **12.** Pour le reste, la structure et le fonctionnement sont identiques au mode de réalisation des figures 1 à 5, auquel on se reportera pour de plus amples détails.

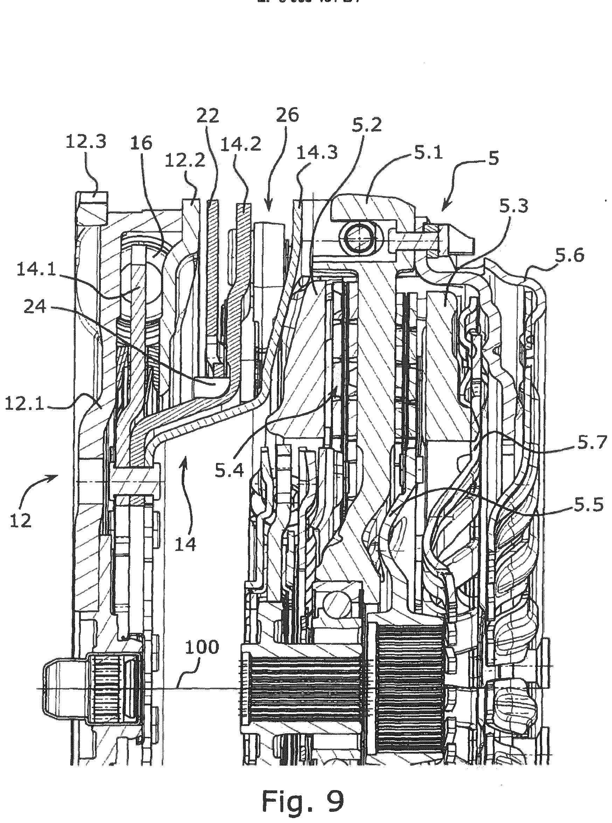

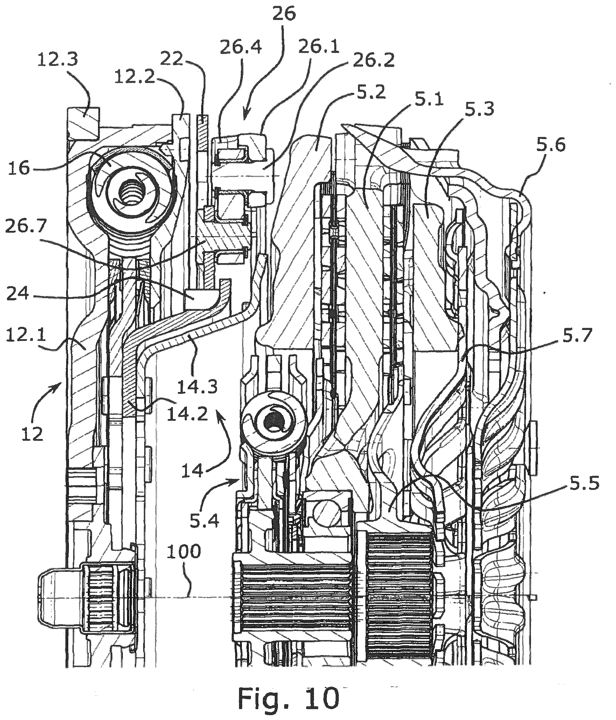

Sur les figures 8 à 10 a été illustré un double volant amortisseur **10** intégrant un mécanisme oscillant articulé **30** selon l'invention, en combinaison avec un double embrayage **5** pour une boîte de transmission à deux arbres d'entrée. La structure du double volant amortisseur **10** est similaire à celle du premier mode de réalisation des figures 1 à 7. Le double volant amortisseur **10** est cinématiquement interposé entre le vilebrequin **2** et le double embrayage **5** qui permet d'entraîner deux arbres d'entrée coaxiaux **3.1, 3.2** d'une boîte de transmission **3.** On se contentera ici de constater que l'organe tournant dont les fluctuations de couple sont à amortir est constitué par le volant secondaire **14** qui comporte, en plus du voile **14.1** et de la pièce massive déportée **14.2,** une pièce de connexion **14.3** assurant la liaison avec un plateau de réaction **5.1** du double embrayage. Le volant oscillant **22** est monté sur un palier lisse ou à roulement **24** porté par la pièce massive **14.2** pour tourner autour de l'axe de révolution **100,** et est lié au volant secondaire **14** par l'intermédiaire de modules de liaison articulés **26** similaires à ceux du premier mode de réalisation. Comme pour le premier mode de réalisation, le volant oscillant **22** est pourvu de butées, qui ne sont pas visibles sur les deux coupes des figures 9 et 10. Le double embrayage **5** a quant à lui une structure connue, avec un premier plateau de pression **5.2,** un deuxième plateau de pression **5.3,** une première friction amortie **5.4** liée au premier arbre d'entrée de la boîte de vitesse et une deuxième friction **5.5** liée au deuxième arbre d'entrée de la boîte de vitesse. Le plateau de réaction **5.1** comporte naturellement des surfaces de friction faisant face aux deux frictions **5.4** et **5.5.** Le premier plateau de pression est commandé par l'intermédiaire d'un premier diaphragme **5.6** et le deuxième plateau de pression par un deuxième diaphragme **5.7.** De manière remarquable, le premier plateau de pression **5.2** est interposé entre la pièce massive déportée **14.2** et le plateau de réaction **5.1.**

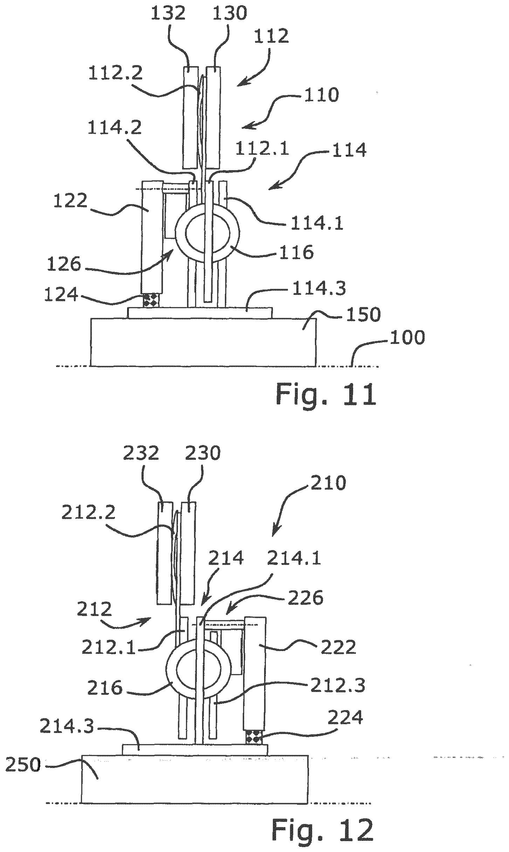

Sur la figure 11 est illustré de façon schématique l'intégration d'un mécanisme de filtration à un embrayage à friction amorti **110** symétrique. L'organe primaire **112** du mécanisme de filtration est ici constitué par le voile **112.1** portant les garnitures de friction **112.2,** qui sont sollicitées par un plateau de pression mobile axialement **132,** contre un plateau de réaction **130.** Le voile **112.1** est lié par des ressorts courbes **116** à un organe secondaire **114** constitué par deux rondelles de guidage **114.1, 114.2** solidaire d'un moyeu cannelé **114.3** fretté sur l'arbre d'entrée **150** de la boîte de transmission. Pour amortir les fluctuations de couple de l'organe secondaire **114,** un volant oscillant **122** est guidé en rotation autour de l'axe de révolution **100** par un palier **122** lisse ou à roulement, et relié à une des rondelles de guidage **114.2** de l'organe secondaire **114** par des modules de liaison articulés **126** similaires à ceux des modes de réalisation précédents. On prévoit également dans ce mode de réalisation une butée (non représentée) pour solidariser le volant oscillant **122** à l'organe secondaire **114** au dessus d'un seuil de vitesse prédéterminé.

Sur la figure 12 est illustré un de façon schématique l'intégration d'un mécanisme de filtration à un embrayage à friction amorti **210** asymétrique. L'organe primaire **212** du mécanisme de filtration est ici constitué par deux rondelles de guidages **212.1, 212.3,** dont l'une porte des garnitures de friction **212.2** qui sont sollicitées par un plateau de pression mobile axialement **232,** contre un plateau de réaction **230.** Les rondelles de guidage **212.1, 212.3** de l'organe primaire sont lié par des ressorts courbes **216** à un organe secondaire **214** constitué par un voile **214.1** solidaire d'un moyeu cannelé **214.3** fretté sur l'arbre d'entrée **250** de la boîte de transmission. Pour amortir davantage les fluctuations de couple de l'organe secondaire **214,** un volant oscillant **222** est guidé en rotation autour de l'axe de révolution **100** par un palier **222** lisse ou à roulement, et relié au voile **214.1** de l'organe secondaire **214** par des modules de liaison articulés **226** similaires à ceux des modes de réalisation précédents. On prévoit également dans ce mode de réalisation une butée (non représentée) pour solidariser le volant oscillant **222** à l'organe secondaire **214** au dessus d'un seuil de vitesse prédéterminé.

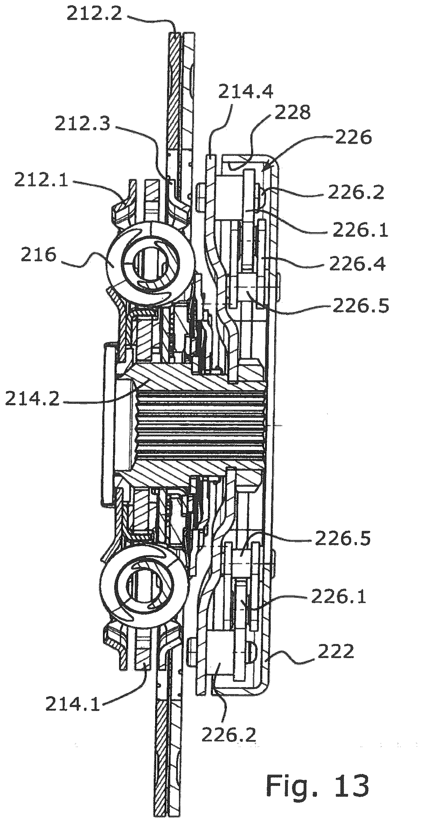

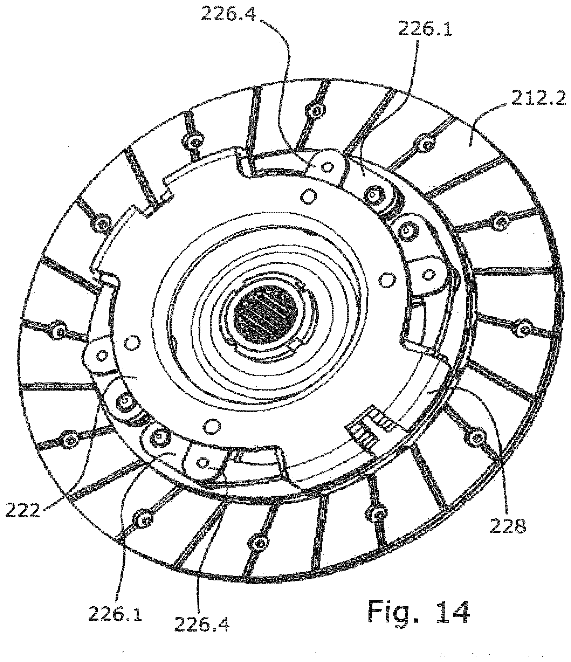

Sur les figures 13 et 14 est illustrée une structure correspondant pour l'essentiel au schéma de principe de la figure 11, et pour laquelle les mêmes signes de référence ont été utilisés. Cette structure se distingue de la précédente par le fait que l'organe secondaire comporte un plateau de support **214.4** fretté sur le moyeu cannelé **214.2** pour faire la liaison avec le volant oscillant **222.** On visualise sur les figures 11 et 12 le bras oscillant **226.1,** la bielle **226.4** et les pivots d'articulation **226.2, 226.5, 226.7** des modules de liaison articulés **226.** On remarque également que le volant oscillant **222** présente un prolongement axial formant la butée **228.**

D'autres variantes sont naturellement possibles. On peut notamment prévoir que les modules articulés soient disposés axialement entre le volant d'inertie oscillant et l'organe primaire, et/ou entre l'organe secondaire et l'organe primaire, et/ou à l'intérieur d'un logement de l'organe primaire. On peut également prévoir dans l'organe primaire un logement pour le volant d'inertie oscillant. On peut également envisager de positionner les butées non pas sur le volant d'inertie oscillant, mais sur l'organe secondaire.

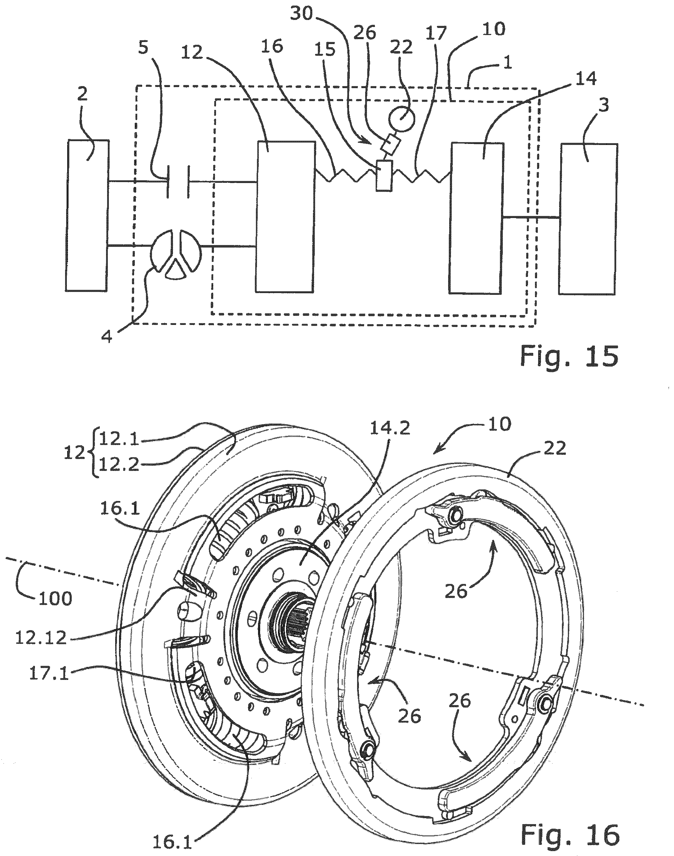

Sur la figure **15** est illustré de façon schématique un convertisseur de couple **1** situé entre un vilebrequin **2** et un arbre d'entrée de boîte de transmission **3.** Ce convertisseur de couple comporte de manière connue en soi un convertisseur hydro-cinétique **4** et un embrayage de verrouillage **5** disposés en parallèle entre le vilebrequin **2** et un organe d'entrée **12** d'un mécanisme de filtration de fluctuation du couple **10** dont l'organe de sortie **14** est solidaire à l'arbre d'entrée de la boîte transmission **3.** Un organe intermédiaire de phasage **15** est interposé entre l'organe d'entrée **12** et l'organe de sortie **14,** relié à l'organe d'entrée **12** par un premier organe élastique **16** de rigidité K1 et à l'organe de sortie **14** par un deuxième organe élastique **17** de rigidité K2. Cet organe intermédiaire est en outre relié à un volant d'inertie oscillant **22** par l'intermédiaire de modules de liaison **26** formant un mécanisme oscillant articulé **30.** Par analogie avec les modes de réalisation précédent, l'organe de phasage **15** constitue dans le présent mode de réalisation un organe secondaire tournant par rapport à l'organe primaire constitué par l'organe d'entrée **12.**

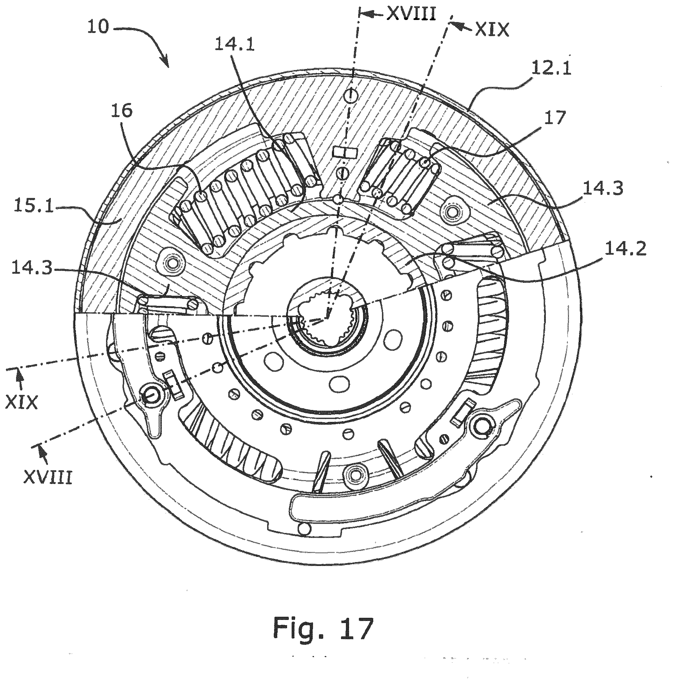

Comme il apparaîtra plus clairement dans les illustrations structurelles des figures **16** à **19** non couvert mais utile à la compréhension de l'invention, les organes d'entrée **12** et de sortie **14** sont des organes tournant autour d'un même axe géométrique de rotation **100,** mobiles en rotation l'un par rapport à l'autre, et chacun par rapport à l'organe intermédiaire de phasage **15,** lui-même également mobile en rotation autour de l'axe de rotation **100.**

Le volant d'inertie oscillant **22** est susceptible d'osciller angulairement par rapport à l'organe intermédiaire de phasage **15.** Le premier organe élastique **16** et le deuxième organe élastique **17** sont disposés en série entre l'organe d'entrée **12** et l'organe de sortie **14,** au sens où un déplacement angulaire quasistatique dans un sens de l'organe de sortie **14** par rapport à l'organe d'entrée **12** provoque une augmentation de l'énergie potentielle élastique des deux organes élastiques **16, 17,** alors qu'un déplacement angulaire relatif dans le sens opposé provoque une diminution de l'énergie potentielle élastique des deux organes élastiques **16, 17.**

Structurellement, l'organe d'entrée **12** du mécanisme de filtration **10** est constitué par sous-ensemble comportant une paire de rondelles de guidage **12.1, 12.2** fixées l'une à l'autre de façon en soi connue, une cloche (non illustrée) de l'embrayage de verrouillage **18** fixée à la rondelle de guidage **12.1** et un moyeu de turbine (non illustré) du convertisseur hydrocinétique **4** fixé à l'autre rondelle de guidage **12.2.** Les deux rondelles de guidage **12.1, 12.2** délimitent entre elles un volume **200** dans lequel est disposé un voile de sortie **14.1** fixé à un moyeu central **14.2** et constituant avec ce dernier l'organe de sortie **14.** Le moyeu central **14.2** est destiné à venir s'emmancher sur l'arbre d'entrée (non représenté) de la boîte de transmission **3.** Le voile de sortie **14.1** forme une étoile qui, dans ce mode de réalisation, présente trois branches **14.3.** La rondelle de guidage **12.1** est ajourée par trois grandes fenêtres **12.11** en arc de cercle séparées deux à deux par trois ponts de matière radiaux **12.12.** Sur les figures, les positions angulaires des ponts de matière **12.12** de la rondelle **12.1** et des branches **14.3** du voile de sortie **14.1** coïncident, mais leur positionnement angulaire relatif peut naturellement varier avec les variations angulaires entre organe d'entrée **12** et organe de sortie **14.**

L'organe intermédiaire de phasage **15** constituant l'organe secondaire du mécanisme de filtration **10** comporte un voile de phasage **15.1** pourvu de trois bras **15.2** s'étendant radialement à l'intérieur du volume **44,** en alternance avec les branches **14.3** du voile de sortie en étoile **14.1.** Le voile de phasage **15.1** est monté de manière à pouvoir tourner autour du moyeu central **14.2.**

Dans le volume délimité par les deux rondelles de guidage **12.1, 12.2** sont logés des ressorts **16.1, 17.1** au nombre de six, trois constituant le premier organe élastique **16** et trois constituant le deuxième organe élastique **17.** Les trois ressorts **16.1** constituant le premier organe élastique **16** sont bandés chacun entre un des bras **15.2** de l'organe intermédiaire de phasage **15** et un des ponts **12.12** constitués dans la rondelle de guidage **12.1,** de manière à travailler lors des mouvements angulaires relatifs entre l'organe intermédiaire de phasage **15** et l'organe d'entrée **12.** Les trois ressorts **17.1** constituant le deuxième organe élastique **17** sont bandés chacun entre un bras **15.2** de l'organe intermédiaire de phasage **15** et une des branches **14.3** du voile de sortie **14.1,** de manière à travailler lors des mouvements angulaires relatifs entre l'organe intermédiaire de phasage **15** et l'organe de sortie **14.** On notera que l'encombrement des ressorts **16.1** du premier organe élastique **16** est plus important que celui des ressorts **17.1** constituant le deuxième organe élastique **17,** la rigidité K1 du premier organe élastique **16** étant de préférence inférieure à celle K2 du deuxième organe élastique **17,** dans un rapport K2/K1 par exemple compris entre 2 et 5, et de préférence entre 2 et 3.

L'organe intermédiaire de phasage **15** comporte également une pièce annulaire plate de support **15.3,** située à l'extérieur des rondelles de guidage **12.1, 12.2.** Le voile de phasage **15.1** comporte des entretoises **15.4** qui font saillie axialement au travers de fenêtres pratiquées dans la rondelle de guidage **12.2** et viennent s'insérer dans des ouvertures **15.5** prévues à cet effet dans la pièce annulaire de support **15.3,** de manière à solidariser la pièce annulaire de support **15.3** au voile de phasage **15.1.**

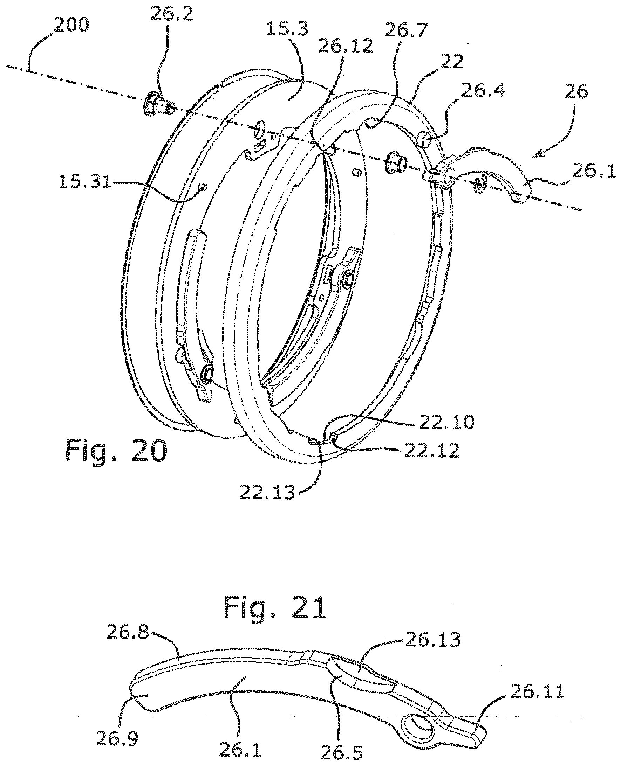

Le volant d'inertie oscillant **22,** constitué par un anneau périphérique, est guidé en rotation autour de l'axe de révolution **100** par rapport à l'organe de phasage **15** grâce à trois pions **15.31** fixés sur la pièce annulaire de support **15.3** et glissant sur trois pistes **22.10** aménagées sur le volant d'inertie oscillant **22,** ces pistes définissant également des butées de fin de course **22.12, 22.13** limitant le débattement angulaire du volant d'inertie oscillant **22** par rapport à l'organe de phasage **15.** Afin d'amortir les fluctuations de couple de l'organe de phasage, le volant d'inertie oscillant **22** est lié à l'organe de phasage **15** par l'intermédiaire de trois modules de liaison **26** disposés à 120° les uns des autres autour de l'axe de révolution **100.** Chaque module de liaison **26,** illustré plus précisément sur les figures **20** à **24****,** comporte un bras oscillant **26.1** articulé à la pièce annulaire de support **15.3** par l'intermédiaire d'un pivot **26.2** pour pivoter autour d'un axe de pivotement **200** parallèle à l'axe de révolution **100,** et un corps roulant **26.4,** en l'espèce un rouleau, roulant sur un chemin de roulement **26.5** formé sur le bras oscillant **26.1** et sur un chemin de roulement **26.7** formé sur le volant d'inertie oscillant **22.** Le chemin de roulement **26.5** formé sur le bras oscillant **26.1** est tourné radialement vers l'extérieur et vers le chemin de roulement **26.7** formé sur le volant d'inertie oscillant **22,** qui lui est tourné radialement vers l'intérieur. Les deux chemins de roulement **26.5, 26.7** sont concaves en coupe transversale perpendiculaire à l'axe de révolution **100.** Le chemin de roulement **26.5** est situé entre le pivot **26.2** et un prolongement massique **26.9** du bras oscillant. Une partie du bras oscillant forme également une face d'appui **26.8.** À l'opposé du chemin de roulement **26.5** et du prolongement massique **26.9** par rapport au pivot **26.2,** le bras oscillant présente un talon **26.11** se projetant vers le volant d'inertie secondaire **22** et glissant sur une piste incurvée **26.12,** ici convexe, qui s'oppose au pivotement du bras oscillant dans le sens horaire et évite ainsi que le rouleau s'échappe du logement constitué radialement entre les chemins de roulement **26.5** et **26.7** et axialement entre la pièce annulaire de support **15.3** et une paroi **26.13** du bras oscillant **26.1.**

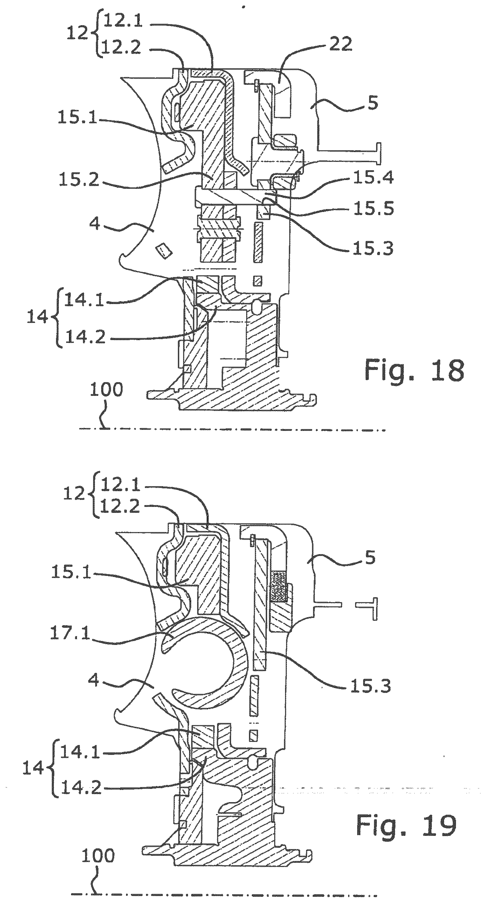

Le dispositif fonctionne de la manière suivante. Au repos, à vitesse de rotation nulle, aucune force centrifuge ne s'exerce sur les bras oscillants **26.1.** On peut positionner le volant d'inertie oscillant **22** dans une position angulaire de référence par rapport à la pièce annulaire de support **15.3** de l'organe de phasage **15,** comme illustré sur la figure **19****.** Le rouleau **26.4** de chaque module de liaison **26** se trouve alors dans une position médiane par rapport aux chemins de roulement **26.5, 26.7,** et l'on peut tracer, dans un plan perpendiculaire à l'axe de révolution **100,** un axe radial **500** passant par l'axe de révolution, par un point de contact entre le rouleau et le chemin de roulement formé sur le bras oscillant et par un point de contact entre le rouleau **26.4** et le chemin de roulement **26.5** formé sur le volant d'inertie oscillant **22,** cet axe **500** étant perpendiculaire aux deux chemins de roulement **26.5, 26.7,** au niveau des deux points de contact. Cette position de référence est donc une position d'équilibre. À partir de cette position angulaire d'équilibre, toute rotation relative du volant d'inertie oscillant **22** par rapport à l'organe de phasage **15,** dans une direction ou l'autre, contribue a rapprocher le prolongement massique **26.9** des bras oscillants **26.1** de l'axe de révolution.

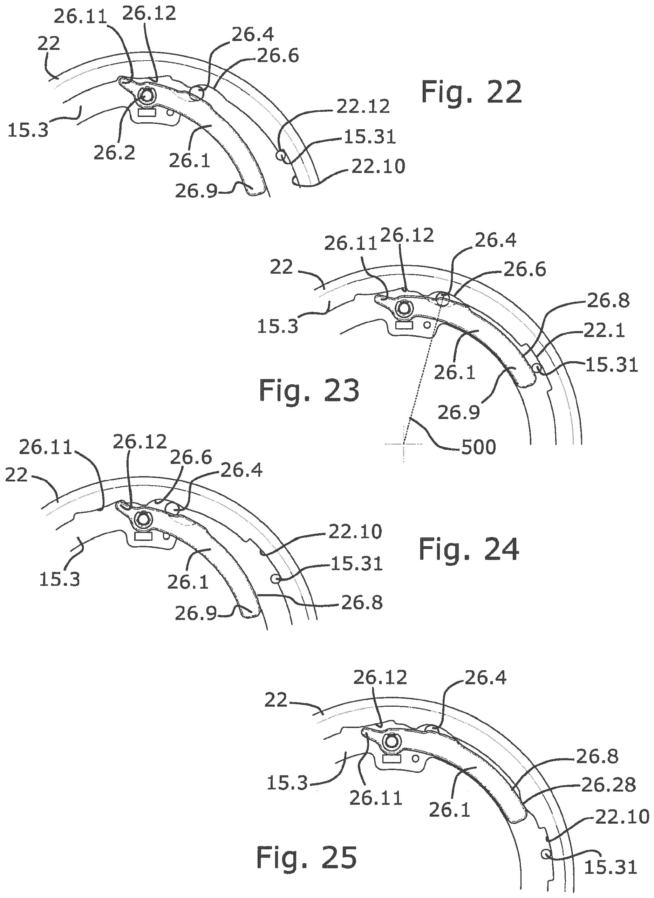

Lorsque le vilebrequin **2** tourne à faible vitesse, les fluctuations de couple moteur ne sont pas filtrées efficacement par les organes élastiques **16, 17** du mécanisme de filtration **10.** À ce régime, les fluctuations de couple à chaque allumage de cylindre sont transmises à l'organe de phasage **15** et font fluctuer le positionnement angulaire relatif de l'organe de phasage **15** et du volant oscillant **22,** en retard de phase. Le mécanisme de liaison constitué par les trois modules articulés **26** permet un débattement angulaire du volant d'inertie oscillant **22** par rapport à l'organe de phasage **15** de part et d'autre de la position d'équilibre de la figure **23****.** Chaque bras oscillant **26.1,** en tournant avec l'organe de phasage **15** autour de l'axe de révolution **100,** applique, par l'effet centrifuge sur le prolongement massique **26.9,** un effort sur le rouleau **26.4** dans la direction définie par les deux chemins de roulement **26.5** et **26.7.** Lorsque le système est dans la position d'équilibre, le rouleau est dans la position d'équilibre décrite précédemment, et les efforts résultants au niveau des chemins de roulement **26.5** et **26.7,** eux-mêmes radiaux, n'engendrent aucun couple de rappel. Les fluctuations du positionnement angulaire relatif de l'organe de phasage **15** et du volant oscillant **22** ont pour effet de changer l'angle de la résultante des efforts transmis par le bras oscillant **26.1** à l'organe de phasage **15,** engendrant un couple de rappel vers la position d'équilibre, qui augmente avec l'amplitude du débattement angulaire et le carré de la vitesse de rotation autour de l'axe de révolution. Le mécanisme oscillant articulé **30,** constitué par le volant oscillant **22** relié à l'organe de phasage **15** par les modules de liaison **26,** se comporte comme un filtre à raideur variable en fonction de la vitesse, qui s'oppose aux variations de couple de l'organe à amortir constitué par l'organe de phasage **15.**

Lorsque la vitesse de rotation autour de l'axe de révolution augmente, la résultante des efforts centrifuges appliqués par le bras oscillant **26.1** sur le rouleau **26.4** augmente et l'amplitude des débattements angulaires entre l'organe de phasage **15** et le volant oscillant **22** diminue. Le bras oscillant tend à se déformer de manière élastique et la face d'appui **26.8** du bras oscillant se rapproche progressivement du volant d'inertie oscillant **22.** Au-delà d'une vitesse critique donnée, par exemple 2200 tr/min, le face d'appui **26.8** du bras oscillant **26.1** entre en contact avec le pion **15.31,** ce qui a pour effet de limiter l'effort sur le rouleau **26.4** et sur le pivot **26.2.**

Le mécanisme oscillant articulé **30** est destiné à amortir l'organe de phasage **15** dans une plage critique où l'on constate des phénomènes de résonnance. Dès que le régime moteur est suffisamment élevé et que la fréquence propre du mécanisme oscillant articulé **30** est dépassée, le volant d'inertie oscillant **22** oscille en opposition de phase par rapport à l'organe de phasage **15.** L'organe de phasage **15** est ainsi sollicité par des couples antagonistes qui se compensent au moins partiellement, à savoir d'une part les couples d'entrée et de sortie transmis par les ressorts **16** et **17,** et d'autre part un couple oscillant trouvant son origine dans le volant d'inertie, et transmis à l'organe de phasage **15** par les rouleaux **26.4,** les bras oscillants **26.1** et les pivots **26.2.** Le moment d'inertie du volant d'inertie oscillant **22** est donc choisi de manière à ce que le mécanisme oscillant articulé **30** ait une fréquence propre très faible par rapport à aux fréquences des oscillations de couple au régime moteur visé.

En combinant le mécanisme de filtration de couple **10** avec le mécanisme oscillant articulé **30,** on bénéficie de l'excellente atténuation des vibrations de l'organe de phasage **15** aux bas régimes, puis on vient bloquer le mécanisme oscillant articulé **30** à plus haut régime, ce blocage du volant oscillant **22** ayant pour effet une augmentation de l'inertie de l'organe de phasage **15.** On évite ainsi une usure prématurée des modules de liaison **26.**

Le profil des chemins de roulement **26.5, 26.6** peut être adapté à chaque application pour obtenir une courbe de réponse adaptée.

Suivant une variante illustrée sur la figure 25, on prévoit sur le volant d'inertie oscillant **22** une butée radiale **28** qui constitue un appui pour le bras oscillant **26.1** dans la position intermédiaire de débattement maximal. On ménage ainsi le pivot **26.2** du bras oscillant en solidarisant le volant d'inertie oscillant **22** à l'organe de phasage **15** lorsque la vitesse de rotation augmente. L'inertie du volant oscillant **22** s'ajoute alors à celle de l'organe de phasage **15** Lorsque la vitesse de rotation continue d'augmenter, les efforts étant répartis entre la butée **28,** le pivot **26.2,** le rouleau **26.4** et les chemins de roulement **26.5, 26.6.**

Les modules de liaison articulés à rouleaux illustrés plus particulièrement dans les modes de réalisation des figures 16 à 25 et les modules de liaison articulés à bielle illustrés plus particulièrement dans les modes de réalisation des figures 1 à 14 sont interchangeables. En d'autres termes, les modules de liaison articulés à bielle peuvent être utilisés en lieu et place des modules de liaison articulés à rouleau pour réaliser de nouvelles variantes des modes de réalisation des figures 16 à 25 et, réciproquement, les modules de liaison articulés à rouleaux peuvent être utilisés en lien et place des modules de liaison articulés à bielle pour réaliser de nouvelles variantes des modes de réalisation des figures 1 à 14.

## Revendications

1. Mécanisme de filtration des fluctuations de couple interposé entre un vilebrequin d'un moteur à combustion interne tournant autour d'un axe de révolution (100) et une boîte de transmission, comportant un organe à amortir (14, 114, 214, 15) tournant autour de l'axe de révolution (100), un volant d'inertie oscillant (22, 122, 222) tournant autour de l'axe de révolution (100) par rapport à l'organe à amortir (14, 114, 214), et des modules articulés (26, 126, 226) permettant un débattement angulaire du volant d'inertie oscillant (22, 122, 222) par rapport à l'organe à amortir (14, 114, 214) de part et d'autre d'une position d'équilibre, les modules articulés (26, 126, 226) comportant chacun au moins un bras oscillant (26.1, 226.1) pivotant radialement par rapport à l'organe à amortir et un organe de liaison cinématique (26.4, 226.4, 26.40) entre le bras oscillant (26.1, 226.1) et le volant d'inertie oscillant (22,122, 222), positionné de manière à ce que lorsque le mécanisme tourne autour de l'axe de révolution (100), les efforts centrifuges sur le bras oscillant (26.1, 226.1) engendrent sur l'organe à amortir (14,114, 214, 15) un couple antagoniste qui tend à rappeler le volant d'inertie oscillant (22, 122, 222) et l'organe à amortir (14, 114, 214) vers la position d'équilibre, le couple antagoniste augmentant avec la vitesse de rotation du mécanisme de filtration et avec l'amplitude du débattement angulaire; le mécanisme de filtration comportant en outre un organe primaire cinématiquement (12, 112, 212) interposé entre le vilebrequin et l'organe à amortir (14, 114, 214), l'organe à amortir constituant un organe secondaire tournant autour de l'axe de révolution (100) par rapport à l'organe primaire (12, 112, 212), **caractérisé en ce que** les modules articulés (26, 126, 226) sont disposés axialement entre l'organe secondaire (14,114,214) et l'organe primaire (12, 112, 212), et/ou à l'intérieur d'un logement de l'organe primaire (12, 112, 212).

2. Mécanisme de filtration selon la revendication 1, **caractérisé en ce qu'**il comporte des moyens de solidarisation du volant d'inertie oscillant à l'organe secondaire lorsque la vitesse de rotation du mécanisme dépasse un seuil prédéterminé.

3. Mécanisme de filtration selon l'une quelconque des revendications précédentes, **caractérisé en ce que** chaque bras oscillant (26.1, 226.1) est disposé en regard d'une butée correspondante (28, 228), pour limiter le mouvement radial vers l'extérieur de chaque bras oscillant (26.1, 226.1),

4. Mécanisme de filtration selon la revendication précédente, **caractérisé en ce que** la butée (28, 228) est solidaire du volant d'inertie oscillant (22, 122, 222).

5. Mécanisme de filtration selon l'une quelconque des revendications précédentes, **caractérisé en ce qu'**il comporte des éléments de rappel élastique (16, 116, 216) pour rappeler l'organe secondaire (14, 114, 214) vers une position angulaire de référence par rapport à l'organe primaire (12, 112, 212).

6. Mécanisme de filtration selon l'une quelconque des revendications précédentes, **caractérisé en ce que** l'un des organes primaire (12, 112, 212) et secondaire (14, 114, 214) comprend un voile (14.1, 112.1, 214.1) et l'autre des organes primaire et secondaire comprend deux rondelles de guidage (12.1, 12.2, 114.1, 114.2, 212.1, 212.3) fixées l'une à l'autre et situées axialement de part et d'autre du voile (14.1, 112.1, 214.1).

7. Mécanisme de filtration selon l'une quelconque des revendications précédentes, **caractérisé en ce que** l'organe primaire (12, 112, 212) ou l'organe secondaire (14, 114, 214) est solidaire de surfaces de friction (30, 112.2, 212.2) d'un embrayage à friction (29,110, 210).

8. Mécanisme de filtration selon l'une quelconque des revendications précédentes, **caractérisé en ce que** le volant d'inertie oscillant (22, 122, 222) est guidé en rotation par un palier (24, 124, 224) monté sur l'organe primaire (12, 112, 212) ou l'organe secondaire (14, 114, 214) ou sur une pièce, notamment un moyeu (214.3) ou une couronne, solidaire de l'organe primaire (12, 112, 212) ou de l'organe secondaire (14, 114, 214).

9. Mécanisme de filtration selon l'une quelconque des revendications précédentes, **caractérisée en ce que** les modules articulés (26, 126, 226) sont deux à deux symétriques par rapport à l'axe de révolution (100), et sont de préférence deux à deux symétriques par rapport à un plan de symétrie contenant l'axe de révolution (100),

10. Mécanisme de filtration selon l'une quelconque des revendications précédentes, **caractérisé en ce que** l'organe de liaison cinématique (26.4, 26.40) comporte au moins un corps roulant (26.4, 26.421), de préférence un rouleau, et **en ce que** le bras oscillant (26.1) pivote par rapport à l'organe à amortir (15,114) autour d'un axe de pivotement (200), le corps roulant (26.4) ayant un axe de rotation parallèle à l'axe de pivotement (200).

11. Mécanisme de filtration selon la revendication 10, **caractérisé en ce que** le corps roulant (26.4) roule sur un chemin de roulement (26.5) formé sur le bras oscillant (26.1) et sur un chemin de roulement (26.6) formé sur le volant d'inertie oscillant (22).

12. Mécanisme de filtration selon l'une quelconque des revendications 1 à 9 **caractérisé en ce que** l'organe de liaison cinématique comporte une bielle de liaison (26.4, 226.4) entre le bras oscillant (26.1, 226.1) et le volant d'inertie oscillant (22, 122, 222).

13. Mécanisme de filtration selon la revendication 4, **caractérisé en ce que** l'organe de liaison cinématique est une bielle de liaison (26.4,226.4) entre le bras oscillant (26.1, 226.1) et le volant d'inertie oscillant (22, 122, 222), le bras oscillant (26.1, 226.1) pivote par rapport à l'organe secondaire (14, 114, 214) autour d'un premier axe de pivotement (26.3, 226.3), la bielle (26.4, 226.4) pivote autour du bras oscillant (26.1, 226.1) autour d'un deuxième axe de pivotement (26.6, 226.6) et par rapport au volant d'inertie oscillant (22, 122, 222) autour d'un troisième axe de pivotement (26.8, 226.8), les premier, deuxième et troisième axes de pivotement étant disposés de telle manière qu'au repos, la distance entre le bras oscillant (26.1, 226.1) et la butée correspondante (28, 228) passe par un minimum non nul lorsque le deuxième axe de pivotement (26.6, 226.6), le troisième axe de pivotement (26.8, 226.8) et l'axe de révolution (100) se positionnent dans un même plan radial.

14. Ensemble mécanique comportant un mécanisme de filtration selon l'une quelconque des revendications précédentes et un embrayage à friction (29, 112, 212), simple ou double, comportant une surface de friction (30, 112.2, 212.2) solidaire de l'organe primaire ou de l'organe secondaire.

## Patentansprüche

1. Mechanismus zur Filterung der Drehmomentschwankungen, welcher zwischen einer um eine Drehachse (100) rotierenden Kurbelwelle einer Brennkraftmaschine und einem Getriebe angeordnet ist und ein um die Drehachse (100) rotierendes zu dämpfendes Organ (14, 114, 214, 15), ein oszillierendes Schwungrad (22, 122, 222), das bezüglich des zu dämpfenden Organs (14, 114, 214) um die Drehachse (100) rotiert, und Gelenkmodule (26, 126, 226), die eine Winkelauslenkung des oszillierenden Schwungrades (22, 122, 222) bezüglich des zu dämpfenden Organs (14, 114, 214) beiderseits einer Gleichgewichtsposition ermöglichen, aufweist, wobei die Gelenkmodule (26, 126, 226) jeweils wenigstens einen Schwingarm (26.1, 226.1), der radial bezüglich des zu dämpfenden Organs schwenkt, und ein Organ zur kinematischen Verbindung (26.4, 226.4, 26.40) zwischen dem Schwingarm (26.1, 226.1) und dem oszillierenden Schwungrad (22, 122, 222) aufweist, das derart positioniert ist, dass, wenn der Mechanismus um die Drehachse (100) rotiert, die Fliehkräfte am Schwingarm (26.1, 226.1) an dem zu dämpfenden Organ (14, 114, 214, 15) ein Gegendrehmoment erzeugen, welches bestrebt ist, das oszillierende Schwungrad (22, 122, 222) und das zu dämpfende Organ (14, 114, 214) in Richtung der Gleichgewichtsposition zurückzuholen, wobei sich das Gegendrehmoment mit der Drehzahl des Mechanismus zur Filterung und mit der Amplitude der Winkelauslenkung erhöht, wobei der Mechanismus zur Filterung außerdem ein kinematisch primäres Organ (12, 112, 212) aufweist, das zwischen der Kurbelwelle und dem zu dämpfenden Organ (14, 114, 214) angeordnet ist, wobei das zu dämpfende Organ ein sekundäres Organ darstellt, das bezüglich des primären Organs (12, 112, 212) um die Drehachse (100) rotiert,
**dadurch gekennzeichnet, dass** die Gelenkmodule (26, 126, 226) axial zwischen dem sekundären Organ (14, 114, 214) und dem primären Organ (12, 112, 212) und/oder im Inneren einer Aufnahme des primären Organs (12, 112, 212) angeordnet sind.

2. Mechanismus zur Filterung nach Anspruch 1, **dadurch gekennzeichnet, dass** es Mittel zur festen Verbindung des oszillierenden Schwungrades mit dem sekundären Organ, wenn die Drehzahl des Mechanismus einen vorbestimmten Schwellenwert überschreitet, aufweist.

3. Mechanismus zur Filterung nach einem der vorhergehenden Ansprüche, **dadurch gekennzeichnet, dass** jeder Schwingarm (26.1, 226.1) gegenüber einem entsprechenden Anschlag (28, 228) angeordnet ist, um die radiale Bewegung jedes Schwingarmes (26.1, 226.1) nach außen zu begrenzen.

4. Mechanismus zur Filterung nach dem vorhergehenden Anspruch, **dadurch gekennzeichnet, dass** der Anschlag (28, 228) mit dem oszillierenden Schwungrad (22, 122, 222) fest verbunden ist.

5. Mechanismus zur Filterung nach einem der vorhergehenden Ansprüche, **dadurch gekennzeichnet, dass** er elastische Rückholelemente (16, 116, 216) aufweist, um das sekundäre Organ (14, 114, 214) in Richtung einer Referenz-Winkelposition bezüglich des primären Organs (12, 112, 212) zurückzuholen.

6. Mechanismus zur Filterung nach einem der vorhergehenden Ansprüche, **dadurch gekennzeichnet, dass** eines von dem primären (12, 112, 212) und sekundären Organ (14, 114, 214) eine Abdeckung (14.1, 112.1, 214.1) umfasst und das andere von dem primären und sekundären Organ zwei Führungsscheiben (12.1, 12.2, 114.1, 114.2, 212.1, 212.3) umfasst, die aneinander befestigt und axial beiderseits der Abdeckung (14.1, 112.1, 214.1) angeordnet sind.

7. Mechanismus zur Filterung nach einem der vorhergehenden Ansprüche, **dadurch gekennzeichnet, dass** das primäre Organ (12, 112, 212) oder das sekundäre Organ (14, 114, 214) mit Reibflächen (30, 112.2, 212.2) einer Reibungskupplung (29, 110, 210) fest verbunden ist.

8. Mechanismus zur Filterung nach einem der vorhergehenden Ansprüche, **dadurch gekennzeichnet, dass** das oszillierende Schwungrad (22, 122, 222) von einem Lager (24, 124, 224) drehbar geführt wird, welches an dem primären Organ (12, 112, 212) oder dem sekundären Organ (14, 114, 214) oder an einem mit dem primären Organ (12, 112, 212) oder dem sekundären Organ (14, 114, 224) fest verbundenen Teil, insbesondere einer Nabe (214.3) oder einem Zahnkranz, angebracht ist.

9. Mechanismus zur Filterung nach einem der vorhergehenden Ansprüche, **dadurch gekennzeichnet, dass** die Gelenkmodule (26, 126, 226) paarweise symmetrisch bezüglich der Drehachse (100) sind und vorzugsweise paarweise symmetrisch bezüglich einer Symmetrieebene sind, welche die Drehachse (100) enthält.

10. Mechanismus zur Filterung nach einem der vorhergehenden Ansprüche, **dadurch gekennzeichnet, dass** das Organ zur kinematischen Verbindung (26.4, 26.40) wenigstens einen Rollkörper (26.4, 26.421) aufweist, vorzugsweise eine Rolle, und dadurch, dass der Schwingarm (26.1) bezüglich des zu dämpfenden Organs (15, 114) um eine Schwenkachse (200) schwenkt, wobei der Rollkörper (26.4) eine Drehachse aufweist, die parallel zu der Schwenkachse (200) ist.

11. Mechanismus zur Filterung nach Anspruch 10, **dadurch gekennzeichnet, dass** der Rollkörper (26.4) auf einer Rollbahn (26.5) rollt, die auf dem Schwingarm (26.1) ausgebildet ist, und auf einer Rollbahn (26.6), die auf dem oszillierenden Schwungrad (22) ausgebildet ist.

12. Mechanismus zur Filterung nach einem der Ansprüche 1 bis 9, **dadurch gekennzeichnet, dass** das Organ zur kinematischen Verbindung eine Verbindungsstange (26.4, 226.4) zwischen dem Schwingarm (26.1, 226.1) und dem oszillierenden Schwungrad (22, 122, 222) umfasst.

13. Mechanismus zur Filterung nach Anspruch 4, **dadurch gekennzeichnet, dass** das Organ zur kinematischen Verbindung eine Verbindungsstange (26.4, 226.4) zwischen dem Schwingarm (26.1, 226.1) und dem oszillierenden Schwungrad (22, 122, 222) ist, der Schwingarm (26.1, 226.1) bezüglich des sekundären Organs (14, 114, 214) um eine erste Schwenkachse (26.3, 226.3) schwenkt, die Stange (26.4, 226.4) um den Schwingarm (26.1, 226.1) um eine zweite Schwenkachse (26.6, 226.6) und bezüglich des oszillierenden Schwungrades (22, 122, 222) um eine dritte Schwenkachse (26.8, 226.8) schwenkt, wobei die erste, zweite und dritte Schwenkachse derart angeordnet sind, dass im Ruhezustand der Abstand zwischen dem Schwingarm (26.1, 226.1) und dem entsprechenden Anschlag (28, 228) ein von Null verschiedenes Minimum durchläuft, wenn die zweite Schwenkachse (26.6, 226.6), die dritte Schwenkachse (26.8, 226.8) und die Drehachse (100) eine Position in derselben radialen Ebene einnehmen.

14. Mechanische Anordnung, welche einen Mechanismus zur Filterung nach einem der vorhergehenden Ansprüche und eine einfache Reibungskupplung oder Doppelreibungskupplung (29, 112, 212), die eine mit dem primären Organ oder dem sekundären Organ fest verbundene Reibfläche (30, 112.2, 212.2) aufweist, umfasst.

## Claims

1. Mechanism for filtering torque fluctuations which is interposed between a crankshaft of an internal combustion engine rotating about an axis of revolution (100) and a transmission box, comprising a member (14, 114, 214, 15) to be damped rotating about the axis of revolution (100), an oscillating flywheel (22, 122, 222) rotating about the axis of revolution (100) with respect to the member (14, 114, 214) to be damped, and articulated modules (26, 126, 226) allowing an angular deflection of the oscillating flywheel (22, 122, 222) with respect to the member (14, 114, 214) to be damped on either side of an equilibrium position, the articulated modules (26, 126, 226) each comprising at least one oscillating arm (26.1, 226.1) pivoting radially with respect to the member to be damped and a kinematic connection member (26.4, 226.4, 26.40) between the oscillating arm (26.1, 226.1) and the oscillating flywheel (22, 122, 222), positioned so that when the mechanism rotates about the axis of revolution (100), the centrifugal forces on the oscillating arm (26.1, 226.1) produce on the member (14, 114, 214, 15) to be damped a counteracting torque which tends to return the oscillating flywheel (22, 122, 222) and the member (14, 114, 214) to be damped towards the equilibrium position, the counteracting torque increasing with the speed of rotation of the filtering mechanism and with the amplitude of the angular deflection, the filtering mechanism additionally comprising a primary member (12, 112, 212) kinematically interposed between the crankshaft and the member (14, 114, 214) to be damped, the member to be damped constituting a secondary member rotating about the axis of revolution (100) with respect to the primary member (12, 112, 212), **characterized in that** the articulated modules (26, 126, 226) are arranged axially between the secondary member (14, 114, 214) and the primary member (12, 112, 212), and/or inside a housing of the primary member (12, 112, 212).

2. Filtering mechanism according to Claim 1, **characterized in that** it comprises means for securing the oscillating flywheel to the secondary member when the speed of rotation of the mechanism exceeds a predetermined threshold.

3. Filtering mechanism according to either one of the preceding claims, **characterized in that** each oscillating arm (26.1, 226.1) is arranged facing a corresponding stop (28, 228) in order to limit the outward radial movement of each oscillating arm (26.1, 226.1) .

4. Filtering mechanism according to the preceding claim, **characterized in that** the stop (28, 228) is secured to the oscillating flywheel (22, 122, 222).

5. Filtering mechanism according to any one of the preceding claims, **characterized in that** it comprises elastic return elements (16, 116, 216) to return the secondary member (14, 114, 214) to an angular reference position with respect to the primary member (12, 112, 212) .

6. Filtering mechanism according to any one of the preceding claims, **characterized in that** one of the primary (12, 112, 212) and secondary (14, 114, 214) members comprises a web (14.1, 112.1, 214.1) and the other of the primary and secondary members comprises two guide washers (12.1, 12.2, 114.1, 114.2, 212.1, 212.3) fastened to one another and situated axially on either side of the web (14.1, 112.1, 214.1).

7. Filtering mechanism according to any one of the preceding claims, **characterized in that** the primary member (12, 112, 212) or the secondary member (14, 114, 214) is secured to friction surfaces (30, 112.2, 212.2) of a friction clutch (29, 110, 210).

8. Filtering mechanism according to any one of the preceding claims, **characterized in that** the oscillating flywheel (22, 122, 222) is guided in rotation by a bearing (24, 124, 224) mounted on the primary member (12, 112, 212) or the secondary member (14, 114, 214) or on a part, in particular a hub (214.3) or a ring, secured to the primary member (12, 112, 212) or to the secondary member (14, 114, 214).

9. Filtering mechanism according to any one of the preceding claims, **characterized in that** the articulated modules (26, 126, 226) are symmetrical in pairs with respect to the axis of revolution (100), and are preferably symmetrical in pairs with respect to a plane of symmetry containing the axis of revolution (100).

10. Filtering mechanism according to any one of the preceding claims, **characterized in that** the kinematic connection member (26.4, 26.40) comprises at least one rolling body (26.4, 26.421), preferably a roller, and **in that** the oscillating arm (26.1) pivots with respect to the member (15, 114) to be damped about a pivot axis (200), the rolling body (26.4) having an axis of rotation parallel to the pivot axis (200).

11. Filtering mechanism according to Claim 10, **characterized in that** the rolling body (26.4) rolls on a rolling track (26.5) formed on the oscillating arm (26.1) and on a rolling track (26.6) formed on the oscillating flywheel (22).

12. Filtering mechanism according to any one of Claims 1 to 9, **characterized in that** the kinematic connection member comprises a connection link (26.4, 226.4) between the oscillating arm (26.1, 226.1) and the oscillating flywheel (22, 122, 222).

13. Filtering mechanism according to Claim 4, **characterized in that** the kinematic connection member is a connecting link (26.4, 226.4) between the oscillating arm (26.1, 226.1) and the oscillating flywheel (22, 122, 222), the oscillating arm (26.1, 226.1) pivots with respect to the secondary member (14, 114, 214) about a first pivot axis (26.3, 226.3), the link (26.4, 226.4) pivots about the oscillating arm (26.1, 226.1) about a second pivot axis (26.6, 226.6) and with respect to the oscillating flywheel (22, 122, 222) about a third pivot axis (26.8, 226.8), the first, second and third pivot axes being arranged in such a way that, at rest, the distance between the oscillating arm (26.1, 226.1) and the corresponding stop (28, 228) passes through a non-zero minimum when the second pivot axis (26.6, 226.6), the third pivot axis (26.8, 226.8) and the axis of revolution (100) are positioned in the same radial plane.

14. Mechanical assembly comprising a filtering mechanism according to any one of the preceding claims and a single or double friction clutch (29, 112, 212) comprising a friction surface (30, 112.2, 212.2) secured to the primary member or to the secondary member.
